# EUROPÄISCHE PATENTSCHRIFT

(11) **EP 0 452 625 B1**
(45) Veröffentlichungstag und Bekanntmachung des Hinweises auf die Patenterteilung: **12.05.1993**
(21) Anmeldenummer: 91101982.6
(22) Anmeldetag: 13.02.1991
(51) Int. Cl.: B62D 7/16

(54) **Verstellbare Befestigung eines Kugelgelenks an einer Spurstange für Lenkgestänge von Kraftfahrzeugen**
Adjustable mounting of a knuckle on a track rod for a steering linkage of motor vehicles
Fixation réglable d'une rotule sur une barre pour une timonerie de direction de véhicules automobiles

(30) Priorität: 14.04.1990 DE 9004325 U
(43) Veröffentlichungstag der Anmeldung: 23.10.1991
(73) Patentinhaber: TRW Fahrwerksysteme GmbH & Co. KG, 40547 Düsseldorf (DE)
(72) Erfinder: Broszat, Lothar, W-4010 Monheim (DE)
(74) Vertreter: Stenger, Watzke & Ring Patentanwälte

(56) Entgegenhaltungen:
- DE-A- 3 739 704
- US-A- 2 077 844
- US-A- 4 714 262

## Beschreibung

Gegenstand der Erfindung ist eine verstellbare Befestigung eines Kugelgelenkes an einer Spurstange für Lenkgestänge von Kraftfahrzeugen mit einem allseitig beweglich an einem Gelenkgehäuse gelagerten Kugelzapfen, welches in einer Befestigungsplatte mit einer Lagerbohrung angeordnet ist, einem spurstangenfesten Befestigungselement, welches durch die Lagerbohrung greift, so daß die Befestigungsplatte um das Befestigungselement schwenkbar gelagert ist, und einem an der Befestigungsplatte angreifenden Feststellelement zur Festlegung des Kugelgelenks in einer bestimmten Schwenklage, wobei das Feststellelement eine Verschraubung ist, die senkrecht zur Achse des Befestigungselementes angeordnet ist und mit einer an der Befestigungsplatte angeordneten Verzahnung kämmt.

Aus der DE-OS 37 39 704 ist eine gattungsgemäße verstellbare Befestigung eines Kugelgelenks an einer Spurstange für Lenkgestänge von Kraftfahrzeugen bekannt, wobei das Kugelgelenk einen um eine Mittelachse allseitig beweglich in einem Gelenkgehäuse gelagerten Kugelzapfen aufweist und die Mittelachse durch Verstellen des Kugelgelenks relativ zur Spurstange verschiebbar ist. Das Kugelgelenk weist ferner eine Befestigungsplatte auf, die eine exzentrisch zur Mittelachse der Bewegungen des Kugelzapfens angeordnete Lagerbohrung hat. Die Befestigungsplatte mit ihrer Lagerbohrung ist an einem spurstangenfesten Befestigungselement schwenkbar gelagert. Zur Festlegung des Kugelgelenkes in einer bestimmten Schwenklage weist die Spurstange eine als Feststellelement ausgebildete Verschraubung auf.

Zum Verstellen der Befestigung des Kugelgelenkes muß diese Verschraubung gelockert werden. Im Anschluß an das Lockern der Verschraubung wird ein Werkzeug zwischen die Befestigungsplatte und einem Verbindungssteg der Spurstange geschoben, so daß eine im unteren Bereich des Werkzeuges angeordnete Schnecke mit einer seitlich an der Befestigungsplatte angeordneten Verzahnung in Eingriff kommt. Durch Verdrehen des Werkzeuges kann nunmehr die Befestigungsplatte um das spurstangenfeste Befestigungselement verschwenkt werden. Nach dem Einstellen des gewünschten Schwenkwinkels wird die Verschraubung zur Festlegung des Kugelgelenks in einer bestimmten Schwenklage angezogen und das Werkzeug entfernt.

Nachteil dieser verstellbaren Befestigung eines Kugelgelenkes an einer Spurstange ist, daß die Verstellung sehr arbeitsaufwendig ist. Ferner erfolgt die Festlegung des Kugelgelenkes in einer bestimmten Schwenklage durch die Verschraubung nur kraftschlüssig, so daß es im Fahrbetrieb zu einer unbeabsichtigten Verstellung der Spur kommen kann. Auch weist diese verstellbare Befestigung den Nachteil auf, daß für die Verstellung ein Spezialwerkzeug benötigt wird.

Ausgehend von diesem Stand der Technik liegt der Erfindung die **Aufgabe** zugrunde, eine verstellbare Befestigung eines Kugelgelenks an einer Spurstange zu schaffen, die einfach und ohne Spezialwerkzeug zu verstellen ist, einen geringen Konstruktionsaufwand hat und trotzdem eine ausreichende Sicherheit gegen eine unbeabsichtigte Verstellung der Befestigung während des Betriebes bietet.

Die **Lösung** dieser Aufgabe sieht vor, daß die Verschraubung eine Bolzen und eine Mutter aufweist, wobei sich die Mutter auf einer Anlagefläche abstützt, die um einen geringen Winkel zur Senkrechten auf die Verschraubungsachse geneigt ist.

Bei dieser verstellbaren Befestigung eines Kugelgelenkes erfolgt die Verstellung dadurch, daß der senkrecht zur Achse des Befestigungselementes angeordnete Bolzen gedreht wird, so daß die Befestigungsplatte mit der daran angeordneten Verzahnung um das spurstangenfeste Befestigungselement verschwenkt wird. Nach dem Einstellen des gewünschten Schwenkwinkels wird die Mutter festgezogen, so daß die Befestigungsplatte nunmehr über die Verzahnung und den mit dieser kämmenden Bolzen formschlüssig festgelegt ist. Demzufolge dient die aus Bolzen und Mutter bestehende Verschraubung sowohl die Einstellung der Befestigungsplatte als auch ihrer formschlüssigen Verbindung mit dem Gelenkgehäuse und dem Lenker. Durch die Neigung der Anlagefläche für die Mutter wird erreicht, daß das gewindeseitige Ende des Bolzens beim Anziehen in Richtung auf den Kugelmittelpunkt des Genlekes gleitet. Ein Flankenspiel wird vermieden. Die Befestigung hat weiterhin den Vorteil, daß die Verstellung mit gebräuchlichen Werkzeugen, wie beispielweise Ring- oder Maulschlüsseln bzw. mit einem Ratschenschlüssel und einem Steckschlüsseleinsatz ausgeführt werden kann.

Vorteilhalfte weitere Ausgestaltungen der Erfindung sind in den Unteransprüchen gekennzeichnet.

Eine Ausgestaltung der Erfindung weist ein zweites Feststellelement auf, welches als eine durch eine Bohrung der Spurstange geführte Verschraubung ausgebildet ist, die ein Langloch der Befestigungsplatte durchgreift, und wobei die Achse des Langloches parallel zur Achse der Lagerbohrung verläuft und sich das Langloch auf einem Kreisbogen um die Lagerbohrung erstreckt.

Dieses zweite Feststellelement dient der zusätzlichen Sicherheit gegen eine unbeabsichtigte Verstellung der verstellbaren Befestigung beim Betrieb des Fahrzeuges.

Bei einer weiteren Ausgestaltung ist vorgesehen, daß die Verzahnung als Innenverzahnung in einem, an einer Seitenfläche der Befestigungsplatte angeordneten Kreisabschnitt ausgebildet ist. Durch diese Ausgestaltung beansprucht die verstellbare Befestigung nur einen sehr geringen Raumbedarf.

Vorzugsweise weist der Kreisabschnitt einen Umschlingungswinkel von ungefähr 90° auf. Hierdurch werden genügend große Reibflächen erzielt, so daß die Flächenpressung zwischen der Verschraubung und der Verzahnung bei der Verstellung der Befestigungsplatte und beim Betrieb des Fahrzeuges nicht zu groß wird. Ferner wird durch diese Ausgestaltung eine leichtgängige Verstellung der verstellbaren Befestigung gewährleistet.

Vorzugsweise beträgt der Winkel zwischen der Anlagefläche und der Senkrechten auf die Verschraubungsachse zwischen 1° und 1,5°.

Eine Erleichterung der Verstellung wird durch eine zwischen der Mutter und der Anlagefläche planparallele Scheibe erzielt.

Weitere Einzelheiten und Vorteile ergeben sich aus der nachfolgenden Beschreibung der zugehörigen Zeichnungen, die eine bevorzugte Ausführungsform einer erfindungsgemäßen verstellbaren Befestigung zeigen. In den Zeichnungen zeigen:
- Fig. 1: eine verstellbare Befestigung eines Kugelgelenkes entlang der Linie I-I der Fig. 2 geschnitten;
- Fig. 2: dieselbe verstellbare Befestigung in der Draufsicht und teilweise geschnitten;
- Fig. 3: dieselbe verstellbare Befestigung als Teilschnitt entlang der Linie III-III der Fig. 2 in vergrößerter Darstellung;
- Fig. 4: ein Kugelgelenk der verstellbaren Befestigung in der Draufsicht und in vergrößerter Darstellung;
- Fig. 5: dasselbe Kugelgelenk entlang der Linie V-V der Fig. 4 geschnitten;
- Fig. 6: dasselbe Kugelgelenk entlang der Linie VI-VI der Fig. 4 geschnitten und
- Fig. 7: die Verzahnung des Kugelgelenkes in einer Teilansicht in der Betrachtungsrichtung VII der Fig. 4 und in vergrößerter Darstellung;

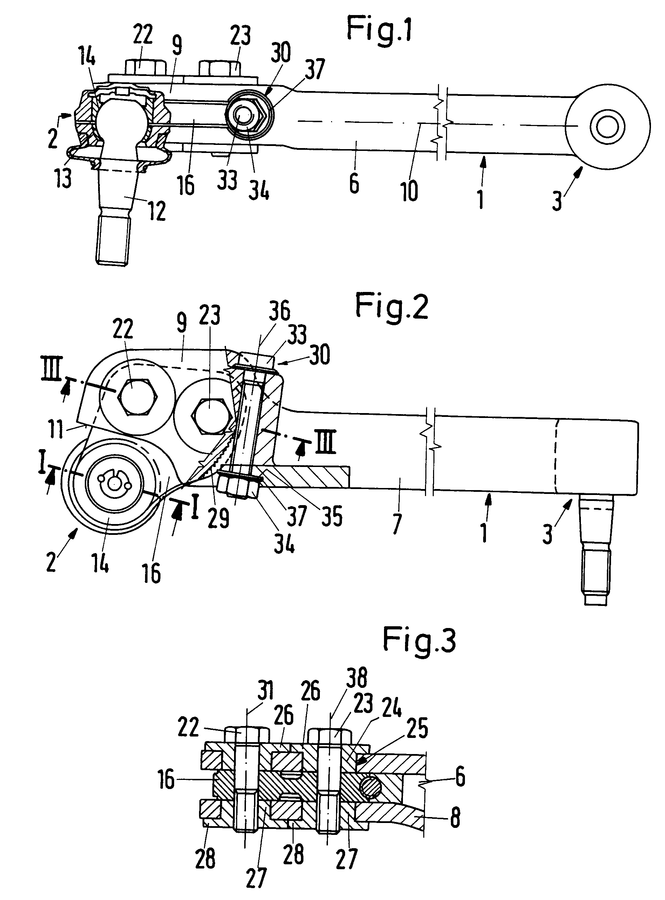

In den Fig. 1 und 2 ist eine Spurstange 1 dargestellt, die an einem Ende ein verstellbar befestigtes Kugelgelenk 2 und am anderen Ende ein unverstellbar befestigtes Kugelgelenk 3 aufweist. Die Spurstange 1 ist im Querschnitt im wesentlichen U-profilförmig ausgebildet. Ein Verbindungssteg 6 zwischen Seitenwänden 7,8 endet vor dem Ende der Spurstange 1, so daß dort ein Gabelkopf 9 ausgebildet ist. Im Hinblick auf die Befestigung des Kugelgelenkes 2 sind die Seitenwände 7,8 im Bereich des Gabelkopfes erhöht. Ferner weist der Gabelkopf 9 eine schräg zur Spurstangenachse 10 verlaufende Schnittkante 11 auf, die eine Schwenkbewegung des Kugelgelenkes 2 ermöglicht.

Das Kugelgelenk 2 hat einen Kugelzapfen 12, der unter Zwischenlage einer Lagerschale 13 in einem Gelenkgehäuse 14 gehalten ist.

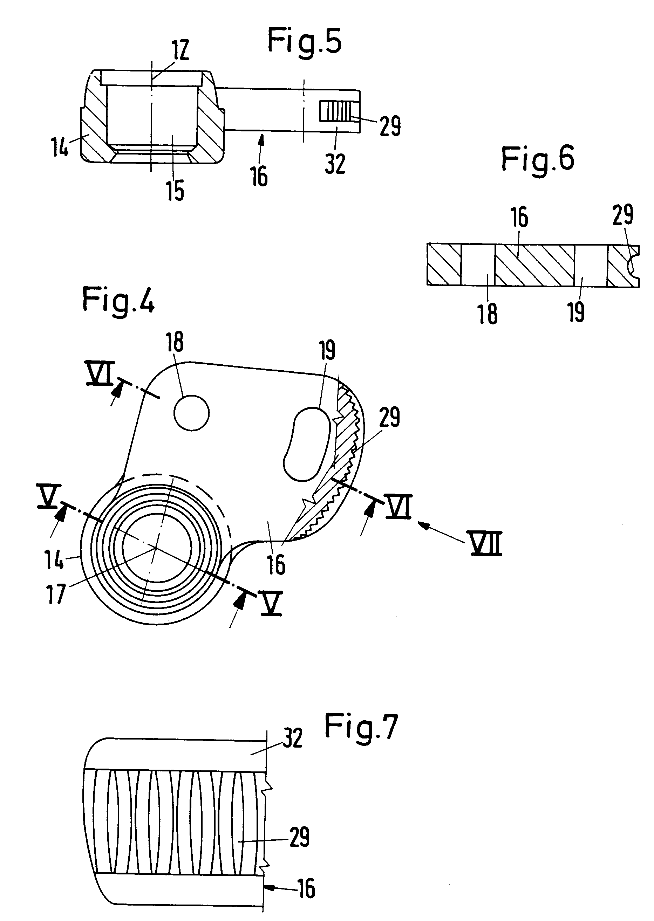

Einzelheiten des Gelenkgehäuses 14 lassen sich besser anhand der Fig. 4 bis 6 beschreiben. Das Gelenkgehäuse 14 hat eine topfförmige Aufnahme 15 für Lagerschale 13 und Kugelzapfen 12, an die seitlich eine Befestigungsplatte 16 angeflanscht ist, die senkrecht zur Mittelachse 17 der Bewegung des Kugelzapfens 12 ausgerichtet ist.

Die Befestigungsplatte 16 hat eine Lagerbohrung 18, die exzentrisch zur Mittelachse 17 angeordnet ist. Die Befestigungsplatte 16 weist ferner ein Langloch 19 auf, welches sich auf einem Kreisbogen um die Lagerbohrung 18 erstreckt.

Wie aus den Fig. 1 bis 3 ersichtlich, ist die Befestigungsplatte 16 zwischen die Seitenwände 7,8 des Gabelkopfes 9 eingelassen und dort mittels Schrauben 22,23 befestigt und festgelegt. Die Schrauben 22,23 sind kopfseitig in Einsätzen 24 aus Kunststoff oder Metall geführt, die in Öffnungen 25 des Gabelkopfes 9 eingesetzt sind und dort axial von Befestigungsflanschen 26 gehalten werden. Gewindeseitig sind die Schrauben 22,23 in Einsätze 27 eingeschraubt, die ebenfalls Befestigungsflansche 28 aufweisen. Die Einsätze dienen insbesondere der gleichmäßigen Krafteinleitung in die Spurstange 1.

Durch Anziehen der Schrauben 22,23 werden die Seitenwände 7,8 der Spurstange 1 im Bereich des Gabelkopfes 9 zusammengezogen, wobei die Befestigungsplatte 16 und somit das Kugelgelenk 2 in der gewünschten Schwenklage fixiert wird. Ein Nachstellen der Verbindung ist auf einfache Weise durch Lockerung der Schrauben 22,23, Schwenken der Befestigungsplatte 16 um die Schraube 22 und nachfolgendes Anziehen der beiden Schrauben 22,23 möglich.

Zur Erleichterung der Ein- bzw. Nachstellung bzw. zur Feineinstellung der Befestigung und zur formschlüssigen Fixierung der Befestigungsplatte weist die Befestigungsplatte 16 eine an einer Seitenfläche 32 der Befestigungsplatte 16 angeordnete Verzahnung 29 auf. Die Verzahnung 29 ist als Innenverzahnung in einem Kreisabschnitt mit einem Umschlingungswinkel von ungefähr 90° ausgebildet und steht mit einer Verschraubung 30 in Eingriff, die senkrecht zu der Achse 31 der Schraube 22 angeordnet ist und einen Bolzen 33 und eine Mutter 34 aufweist.

Die Mutter 34 stützt sich auf einer Anlagefläche 35 ab, die um einen geringen Winkel von ungefähr 1° bis 1,5° zur Senkrechten auf die Verschraubungsachse 36 geneigt angeordnet ist. Zwischen der Anlagefläche 35 und der Mutter 34 befindet sich eine planparallele Scheibe 37.

Wie besonders gut aus der Fig. 4 ersichtlich ist, ist die als eine Innenverzahnung ausgebildete Verzahnung 29 auf einem Kreisbogen um die Lagerbohrung 18 angeordnet, so daß sie die Befestigungsplatte 16 um die Lagerbohrung 18 in Drehung versetzen kann.

Zum Einstellen der Spur werden zuerst die Schrauben 22 und 23 gelockert. Im Anschluß hieran wird die auf den Bolzen 33 geschraubte Mutter 34 gelockert, so daß der Bolzen 33 gedreht werden kann und die Befestigungsplatte 16 über die sich mit dem Bolzen 33 im Eingriff befindliche Verzahnung in die gewünschte Stellung verschwenkt wird.

Nach dem Einstellen der gewünschten Schwenklage werden die Mutter 34 und die Schrauben 22,23 zur Fixierung dieser Schwenklage wieder angezogen.

Da alle Verschraubungen einen handelsüblichen Sechskant aufweisen, ist das Einstellen der verstellbaren Befestigung mit normalen Ring- bzw. Maulschlüsseln oder mit einem Ratschenschlüssel und einem Steckschlüsseleinsatz möglich.

Die Erfindung ist nicht auf das dargestellte Ausführungsbeispiel beschränkt. Es sind vielmehr verschiedene Änderungen und Abwandlungen möglich, ohne den Rahmen der Erfindung, der durch den Inhalt der Patentansprüche bestimmt ist, zu verlassen. Beispielsweise kann die Verschraubung 30 auch oberhalb oder unterhalb der Befestigungsplatte 16 angeordnet sein und mit einer auf oder unter der Befestigungsplatte 16 angeordneten Verzahnung im Eingriff stehen. Ferner können andere als die im Ausführungsbeispiel gezeigten Verschraubungen Verwendung finden.

## Patentansprüche

1. Verstellbare Befestigung eines Kugelgelenkes (2) an einer Spurstange (1) für Lenkgestänge von Kraftfahrzeugen, mit einem allseitig beweglich in einem Gelenkgehäuse (14) gelagerten Kugelzapfen (12), welches in einer Befestigungsplatte (16) mit einer Lagerbohrung (18) angeordnet ist, einem spurstangenfesten Befestigungselement (22), welches durch die Lagerbohrung (18) greift, so daß die Befestigungsplatte (16) um das Befestigungselement (22) schwenkbar gelagert ist, und einem an der Befestigungsplatte (16) angreifenden Feststellelement zur Festlegung des Kugelgelenks (2) in einer bestimmten Schwenklage, wobei das Feststellelement eine Verschraubung (30) ist, die senkrecht zur Achse (31) des Befestigungselementes (22) angeordnet ist und mit einer an der Befestigungsplatte (16) angeordneten Verzahnung (29) kämmt,
**dadurch gekennzeichnet,**
daß die Verschraubung (30) einen Bolzen (33) und eine Mutter (34) aufweist, wobei sich die Mutter (34) auf einer Anlagefläche (35) abstützt, die um einen geringen Winkel zur Senkrechten auf die Verschraubungsachse (36) geneigt ist.

2. Befestigung nach Anspruch 1, gekennzeichnet durch ein zweites Feststellelement (Schraube 23), welches als eine durch eine Bohrung der Spurstange (1) geführte Verschraubung ausgebildet ist, die ein Langloch (19) der Befestigungsplatte (16) durchgreift, und wobei die Achse (38) des Langloches (19) parallel zur Achse (31) der Lagerbohrung (18) verläuft und sich das Langloch (19) auf einem Kreisbogen um die Lagerbohrung (18) erstreckt.

3. Befestigung nach einem der Ansprüche 1 oder 2, dadurch gekennzeichnet, daß die Verzahnung (29) innerhalb der Befestigungplatte (16) liegt und an einem einer Seitenfläche (32) der Befestigungsplatte (16) angeordneten Kreisabschnitt ausgebildet ist.

4. Befestigung nach Anspruch 3, dadurch gekennzeichnet, daß der Kreisabschnitt einen Bogenwinkel von ungefähr 90° aufweist.

5. Befestigung nach Anspruch 1, dadurch gekennzeichnet, daß der Winkel zwischen der Anlagefläche (35) und der Senkrechten auf die Verschraubungsachse (36) 1° bis 1,5° beträgt.

6. Befestigung nach Anspruch 1, dadurch gekennzeichnet, daß zwischen der Mutter (34) und der Anlagefläche (35) eine planparallele Scheibe (37) angeordnet ist.

## Claims

1. Adjustable mounting of a ball joint (2) on a track rod (1) for steering linkages of motor vehicles, having a ball-end pin (12) which is supported with mobility in all directions in a joint housing (14) and is arranged in a mounting plate (16) having a bearing hole (18), a mounting element (22) which is fixed in relation to the track rod and reaches through the bearing hole (18), so that the mounting plate (16) is supported pivotably about the mounting element (22), and a fixing element, engaging on the mounting plate (16), for fixing the ball joint (2) in a particular pivoted position, the fixing element being a screwed fastener (30) which is arranged perpendicularly to the axis (31) of the mounting element (22) and meshes with a toothing (29) arranged on the mounting plate (16), characterised in that the screwed fastener (30) has a bolt (33) and a nut (34), the nut (34) being supported on a bearing surface (35) which is inclined at a small angle to the line perpendicular to the axis (36) of the screwed fastener.

2. Mounting according to Claim 1, characterised by a second fixing element (screw 23), which is designed as a screwed fastener which is passed through a hole in the track rod (1) and reaches through an elongate hole (19) in the mounting plate (16), the axis (38) of the elongate hole (19) extending parallel to the axis (31) of the bearing hole (18), and the elongate hole (19) extending over a circular arc around the bearing hole (18).

3. Mounting according to either of Claims 1 or 2, characterised in that the toothing (29) lies within the mounting plate (16) and is formed on a circular segment arranged on a side face (32) of the mounting plate (16).

4. Mounting according to Claim 3, characterised in that the circular segment has an arc angle of about 90°.

5. Mounting according to Claim 1, characterised in that the angle between the bearing surface (35) and the line perpendicular to the axis (36) of the screwed fastener is from 1° to 1.5°.

6. Mounting according to Claim 1, characterised in that a washer (37) with parallel faces is arranged between the nut (34) and the bearing surface (35).

## Revendications

1. Fixation réglable d'une articulation à rotule (2) sur une barre d'accouplement (1) d'organes de direction assemblés de véhicules automobiles, comprenant un pivot à rotule (12) monté mobile de tous côtés dans une enveloppe (14) qui est disposée dans une plaque de fixation (16) qui comporte un trou de montage (18), ladite fixation comprenant par ailleurs un élément (22) de fixation solidaire de la barre d'accouplement et passant par le trou de montage (18) de manière que la plaque de fixation (16) soit montée de manière à pouvoir exécuter un pivotement autour de l'élément de fixation (22), ainsi qu'un élément de blocage qui attaque la plaque de fixation (18) et qui est destiné à positionner l'articulation à rotule (2) à une position angulaire déterminée, l'élément de blocage étant un boulonnage (30) qui est disposé perpendiculairement à l'axe (31) de l'élément de fixation (22) et qui engrène avec une denture (29) située sur la plaque de fixation (16), caractérisée en ce que le boulonnage (30) comprend un boulon (33) et un écrou (34), l'écrou (34) portant contre une surface d'appui (35) qui est inclinée d'un faible angle sur la perpendiculaire à l'axe (36) du boulonnage.

2. Fixation selon la revendication 1, caractérisée par un second élément de blocage (vis 23) qui est conformé en boulonnage passant par un trou de la barre d'accouplement (1) et passant par une boutonnière (19) de la plaque de fixation (16), l'axe (38) de la boutonnière (19) étant parallèle à l'axe (31) du trou de montage (18) et cette boutonnière (19) étant disposée en arc de cercle autour du trou de montage (18).

3. Fixation selon l'une des revendications 1 ou 2, caractérisée en ce que la denture (29) est située à l'intérieur de la plaque de fixation (16) et elle est disposée en segment de cercle placé sur une surface latérale (32) de la plaque de fixation (16).

4. Fixation selon la revendication 3, caractérisée en ce que l'angle au centre de l'arc du segment de cercle est d'environ 90°.

5. Fixation selon la revendication 1, caractérisée en ce que l'angle formé entre la surface d'appui (35) et la perpendiculaire à l'axe (36) du boulonnage est de 1° à 1,5°.

6. Fixation selon la revendication 1, caractérisée en ce qu'une rondelle plane (37) à surfaces parallèles est disposée entre l'écrou (34) et la surface d'appui (35).
